# EUROPEAN PATENT SPECIFICATION

(11) **EP 2 976 976 B1**
(45) Date of publication and mention of the grant of the patent: **04.09.2019**
(21) Application number: 15176400.8
(22) Date of filing: 13.07.2015
(51) Int. Cl.: A47J 36/06, A47J 43/28, A47J 45/06

(54) **COOKWARE INCLUDING LID HAVING HANDLE WITH UTENSIL REST**
KOCHGESCHIRR MIT DECKEL MIT GRIFF MIT UTENSILIENSTÜTZE
USTENSILE DE CUISINE COMPRENANT UN COUVERCLE AYANT UNE POIGNÉE AVEC SUPPORT D'USTENSILE

(30) Priority: 21.07.2014 US 201414337112
(43) Date of publication of application: 27.01.2016
(73) Proprietor: Dart Industries Inc., Orlando, Florida 32837 (US)
(72) Inventor: Pallotto, Simone, Orlando, FL Florida 32837 (US); De Leo, Anthony M., Orlando, FL Florida 32837 (US)
(74) Representative: Barton, Matthew Thomas

(56) References cited:
- EP-A1- 0 992 209
- EP-A1- 2 556 779
- DE-U1- 29 813 565
- JP-A- 2000 070 162
- US-A- 1 853 852
- US-A1- 2010 251 902
- US-A1- 2011 095 031

## Description

### BACKGROUND OF THE INVENTION

The present invention relates in general to household cookware including a lid having a handle with a utensil rest, such as a spoon rest.

It is known to provide cookware with a handle and spoon rest. Problems with known cookware having spoon rests include that they are difficult to use, complicated, and the utensil may only rest in one position.

US 2010/251902 discloses a slow cooker apparatus for cooking and/or heating food. The slow cooker comprises a component on its lid for supporting a utensil. The component is movable between a storage position and a use position.

EP 0 992 209 discloses a hand grip that is attached to the center of a lid. The hand grip has a concave shape and is elongate. The hand grip is attached to the lid at one end and has a second end that extends out into the surrounding environment. The hand grip is long enough so that it can be used to lift the lid off the pan.

### SUMMARY OF THE INVENTION

An object of the present invention is to provide a lid with a handle which overcomes the drawbacks of the prior art.

Another object of the present invention is to provide a lid having a handle with a utensil rest portion which is easier to use than known lids, is versatile, and reduces the likelihood of a utensil in the utensil rest portion smearing or leaving food from the utensil on the lid, in use.

A further object of the present invention is to provide a lid having a handle and a utensil rest portion by which a user can rest a utensil in a number of rest positions.

Yet another object of the present invention is to provide a lid having a handle and a utensil rest portion as well as a utensil securing element for securing a handle of utensil in one position and for resting a working end of the utensil and the handle of the utensil in a second position.

These and other objects are achieved by cookware according to the invention including a lid having a handle incorporating a utensil rest portion, and which is less messy than known devices. The utensil rest portion includes a utensil handle securing element which holds a utensil handle, and the utensil rest portion likewise includes a utensil resting element on which the utensil handle and the working end (or head) of the utensil may lie in a rest position. The utensil handle securing element may include an aperture, which may extend lengthwise along the lid handle. The lid handle may include an upwardly extending region and an inwardly extending portion extending away from the upwardly extending region toward the center of the lid. The utensil rest portion may include a utensil handle rest element on a free end of the inwardly extending portion, and a utensil working end rest element as well as a utensil handle securing element on the upwardly extending region of utensil handle.

### BRIEF DESCRIPTION OF THE DRAWINGS

The objects and features of the invention noted above are explained in more detail with reference to the drawings, in which like reference numerals denote like elements, and in which:
FIG. 1 is a top perspective view of the lid having a handle with a utensil rest portion according to the present invention;
FIG. 2 is a top plan view of the lid of Fig. 1;
FIG. 3 is an enlarged cross-sectional view along line 3-3 of Fig. 2;
FIG. 4 is a top perspective view of the lid having a handle with a utensil rest portion according to the invention, in use on a container; and
FIG. 5 is a top perspective view similar to Fig. 4 in a different use position.

### DETAILED DESCRIPTION OF THE INVENTION

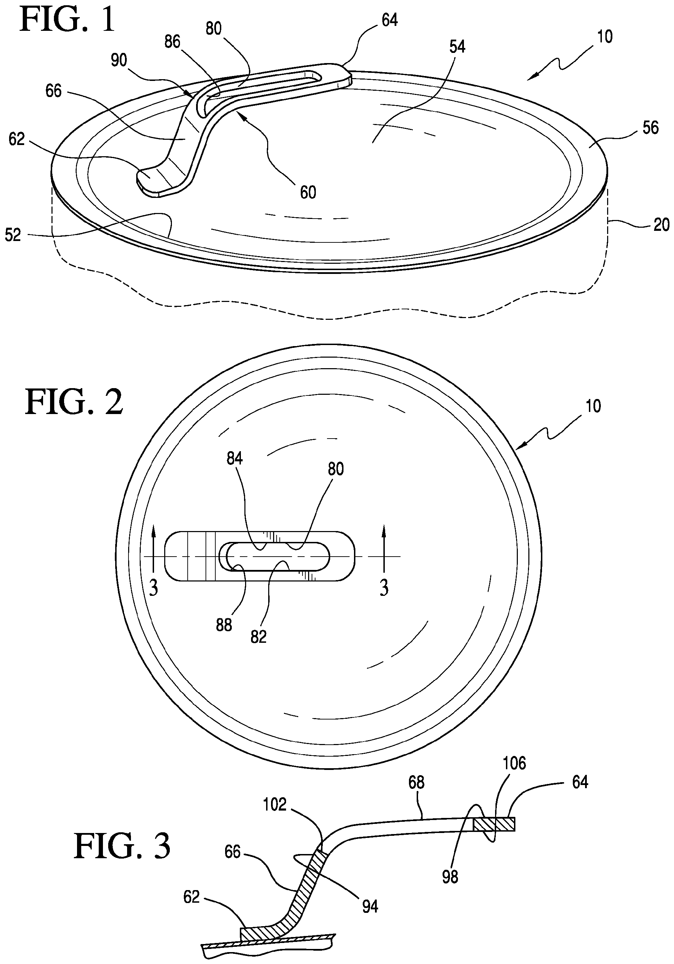

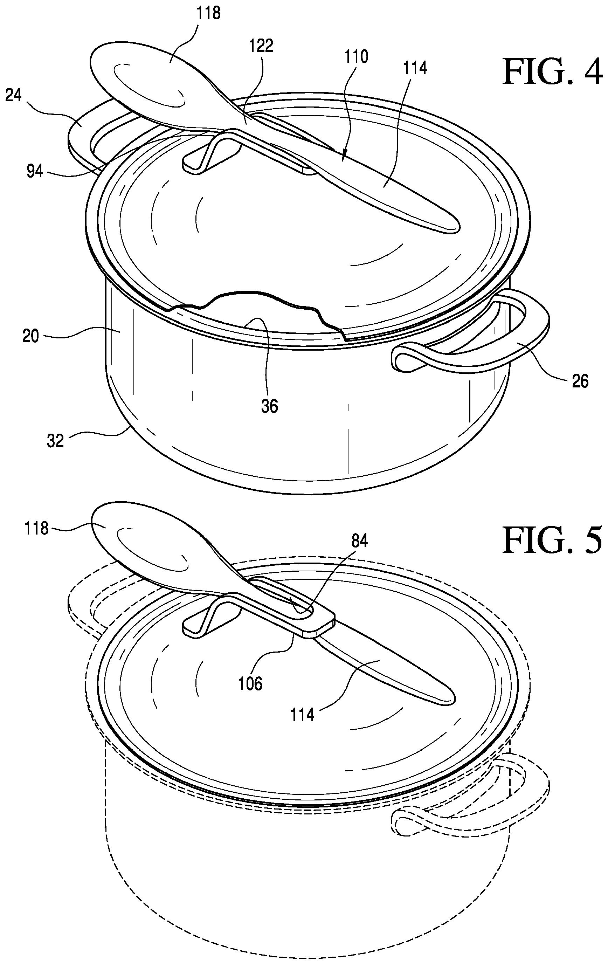

With reference to FIGS. 1-3, a cookware according to the invention includes a lid 10 for covering an open top of a container 20, such as a pot. For ease of discussion, reference is made to Figs. 4 and 5 in which container 20 is shown having handles 24, 26, and an open end 36. Lid 10 may include an outer region 52 and an inner region 54. A lid handle 60 having a first end 62 and a second, free end 64 may be provided on lid 10. First end 62 may be attached, such as fixedly attached as shown, to outer region 52 of lid 10. First end 62 could of course alternatively be attached to the inner region 54.

Lid handle 60 may further include an upwardly extending region 66 and an inwardly extending portion 68 ending in free end 64. The inwardly extending portion 68 is of course not limited to extending inwardly from the outer region 52 toward the inner region 54, and portion 68 is named in this manner only for narrative convenience. Should the first end 62 be secured to the center of the lid 10, then the inwardly extending portion 68 would actually extend radially outward. This is encompassed within the present invention. An aperture 80 including a first side 82 and a second, spaced apart side 84 may be provided in inwardly extending portion 68 and continue uninterrupted into upwardly extending region 66. Aperture 80 may serve as a utensil handle securing element for holding a utensil handle of a utensil including a handle and a working end (or head). For example, aperture 80 may include regions 86, 88, respectively, which hold or assist in
holding a utensil handle depending on the configuration of the utensil handle being used. Use will be described in greater detail below with referenced to Figs. 4 and 5. A utensil retaining and resting portion 90 may be provided. Utensil resting portion 90 may include a working end resting element 94 on which a working end, such as the bowl of a spoon, may rest when in a resting position. Utensil retaining and resting portion 90 may further include a utensil handle rest element 98 on which a utensil handle may rest in a further rest position, such as shown in Fig. 5 and detailed below. Utensil retaining and resting portion 90 may further include a utensil handle securing or engaging element 102 provided on upwardly extending region 66, as best seen in Figs. 1-3. The engaging element 102 is formed by a first end of the aperture 80, and the second end of aperture 80 forms a rear engaging element 103.

Utensil handle securing or engaging element may be considered a part of aperture 80, namely, the first and second sides 82 and 84 of aperture 80, or the regions 86, 88 specifically. Depending on the shape of the utensil secured, the utensil handle may or may not engage the regions 86 and 88, when utensil is in the rest portion position of Fig. 4 in which the utensil handle may engage. Rather, there may be utensil handles which may be held with a retaining element 102 provides a portion of, or, indeed, the majority of the support for retaining the utensil handle.

As shown in the Figs., and as will be appreciated, it is preferred that the utensil rest portion on the handle according to the invention is configured for holding the working end 118 of utensil away from inner region 54 of lid 10. In that manner, when a user grasps handle 60 on inwardly extending portion 68, then the user grasps utensil handle 114 when picking up lid 10 by its handle 10. In that manner, the user's hand will not contact food which may be on working end 118 of the handle, in use.

It is contemplated that the configuration of the handle rest may be provided such that in one or both of the use positions of Figs. 4 and 5, the working end 118 of the utensil is located at an opposite direction as shown; i.e., located substantially above inner region 54 of the lid.

Further, as shown in the different use positions of Figs. 4 and 5, a utensil 110 having a handle 114 and a working end 118 may rest on handle 60, as shown. Fig. 4 shows a first use position in which utensil handle 114 rests on utensil handle rest element 98 and working end 118 rests on working end resting element 94. As will be readily understood, the point at which utensil 110 rests on handle 60 may be in a transition region 122 of utensil 110 located between handle 114 and working end 118. In the use position of Fig. 4, a portion of working end 118 or of transition region 122 will rest on working end resting element 94.

A further use position is shown in Fig. 5 in which utensil handle 114 engages one or more of utensil handle engaging element 102, and first and second regions 86 and 88 of slot 80. As shown in Fig. 5, in the case of the illustrated utensil 110, utensil 110 contacts handle 60 in the regions of engaging element 102 and regions 86 and 88 of aperture 80. Utensil handle 114 does not contact a further utensil handle engaging region 106, as shown. This may be appreciated by considering the unnumbered space or gap located between utensil handle 114 and side 84 of aperture 80. If a different utensil were in use, its handle 114 might contact engaging element 106, as will be readily understood. More particularly, the engaging element 102 would act as a balance point for the handle 114, with the weight of the working end 118 causing the utensil to rotate the working end downward, but the abutment of the utensil handle 114 against the engaging region 106 preventing such rotation.

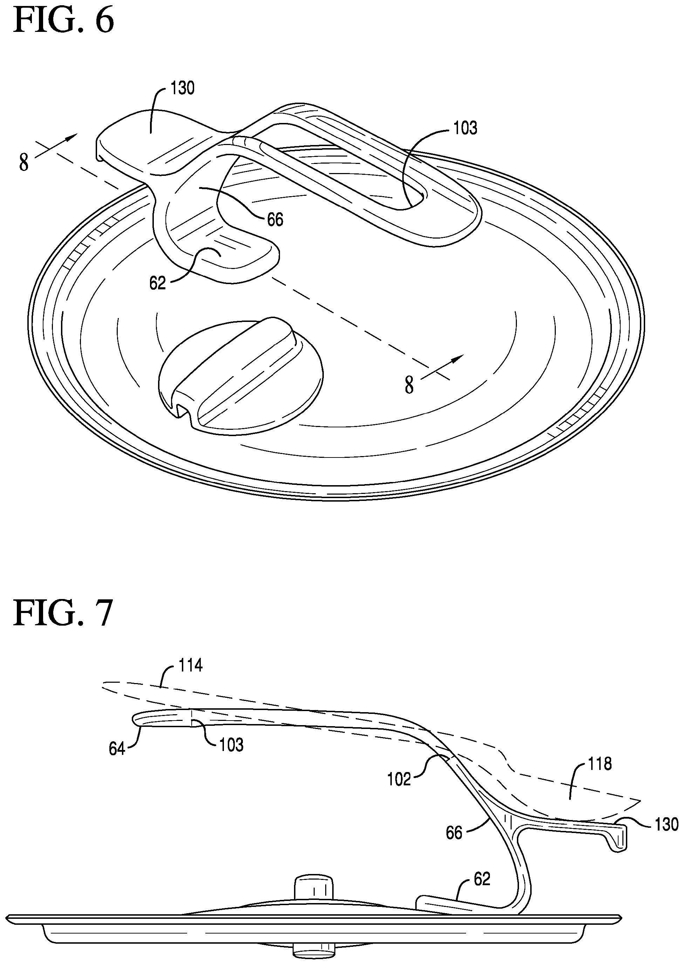

A further embodiment of the lid handle is shown in Figs. 6-8. In this embodiment the lid handle 60 further includes a head rest 130 in the form of a platform extending from the upwardly extending region 66 at a position spaced below the utensil handle engaging element 102. The head rest 130 ends in a free end. As best illustrated in Fig. 7, the utensil working end (or head) 118 may rest upon the head rest 130, with a portion of the utensil handle 114 received within the slot 80 to prevent lateral displacement. The utensil handle 114 will further rest upon one or both of the element 102 or 103. The utensil will thus be securely held against accidental or unintended movement, yet will be readily available for use. Further, as with the other two descriptions of use, the user could lift the lid 10 using the lid handle 60 while the utensil 110 is resting on the lid handle 60.

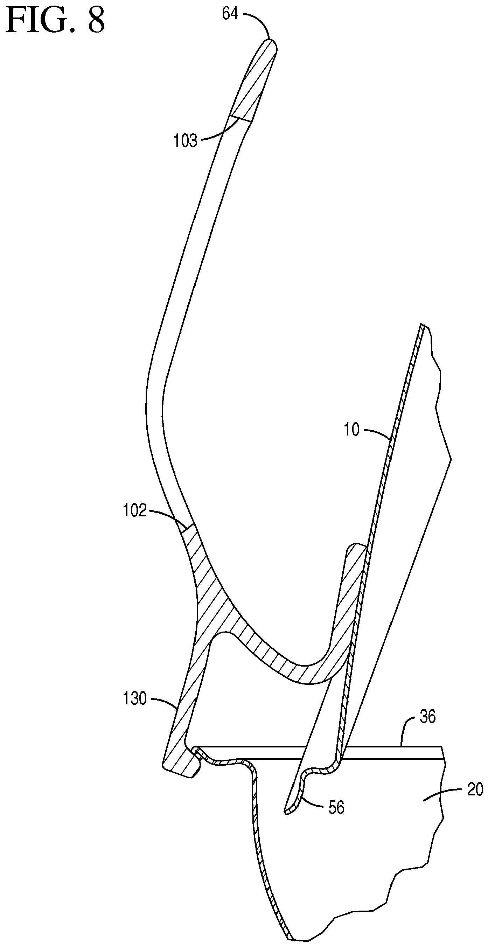

In a further improvement, the free end of the head rest 130 further includes a downward extending hook 140. As best illustrated in Fig. 8, the lid 10 may be partially received within and rest upon the open end 36 of the pot, with the hook 140 engaging the outer portion of the open end to thus hold the lid 10 in a generally upright position allowing access to the pot without having to hold the lid 10.

It is further contemplated that lid 10 may be provided in combination with container 20, and lid 10 and container 20 have been sized and configured so that lid 10 mates with and closes open end 36 of container 20.

From the foregoing it will be seen that this invention is one well adapted to attain all ends and objects set forth above together with the other advantages which are inherent within its structure.

It will be understood that certain features and subcombinations are of utility and may be employed without reference to other features and subcombinations. This is contemplated by and is within the scope of the claims.

Since many possible embodiments may be made of the invention without departing from the scope of the claims, it is to be understood that all matter herein set forth or shown in the accompanying drawings is to be interpreted as illustrative, and not in a limiting sense.

## Claims

1. A cookware, comprising:
a lid (10) for covering an open top of a container (20);
a handle (60) provided on said lid said lid handle (60) comprising a first end (62) attached to the lid (10) and a second, free end (64);
said lid handle (60) having a utensil rest portion (90);
said utensil rest portion (90) having a utensil handle securing element for holding a utensil handle of a utensil having the utensil handle and a working end;
said utensil rest portion (90) having a utensil handle rest element (98) on a top face of said lid handle (60); and
said utensil rest portion (90) having a utensil working end rest element (94) on said lid handle (60); **characterized in that**:
said utensil handle securing element in said lid handle (60) includes an aperture (80).

2. Cookware as in claim 1, wherein:
said first end (62) of said lid handle (60) is attached to an outer region of said lid (10), extends away from said outer region toward the center of said lid (10); and
said aperture (80) extends lengthwise along said lid handle (60).

3. Cookware as in claim 1, wherein:
said aperture (80) includes a first side (82) and a second side (84) spaced apart from said first side (82), and said first (82) and second sides (84) engaging a utensil handle placed in said aperture (80).

4. Cookware as in any preceding claim, wherein:
said lid handle (60) includes an upwardly extending region (66) and an inwardly extending portion (68) extending away from said upwardly extending region (66) toward the center of said lid (10) and ending in the free end (64);
said utensil handle rest element (98) is on said free end (64); and
said utensil working end rest element (94) is on said upwardly extending region (66).

5. Cookware as in claim 4, wherein:
said utensil handle securing element is adjacent said utensil working end rest element (94).

6. Cookware as in any preceding claim, wherein:
a container (20) having an open top is provided; and
said lid (10) is sized for covering said open top.

## Patentansprüche

1. Kochgeschirr, umfassend:
einen Deckel (10) zum Abdecken einer offenen Oberseite eines Behälters (20);
einen Griff (60), der auf dem Deckel vorgesehen ist, wobei der Deckelgriff (60) ein erstes Ende (62), das an dem Deckel (10) befestigt ist, und ein zweites, freies Ende (64) umfasst;
wobei der Deckelgriff (60) einen Utensilienstützabschnitt (90) aufweist;
wobei der Utensilienstützabschnitt (90) ein Sicherungselement für einen Utensiliengriff zum Halten eines Utensiliengriffs eines Utensils mit dem Utensiliengriff und einem Arbeitsende aufweist;
wobei der Utensilienstützabschnitt (90) ein Stützelement (98) für einen Utensiliengriff auf einer oberen Fläche des Deckelgriffs (60) aufweist; und
wobei der Utensilienstützabschnitt (90) ein Stützelement (94) für ein Utensilienarbeitsende an dem Deckelgriff (60) aufweist; **dadurch gekennzeichnet, dass**:
das Sicherungselement für den Utensiliengriff in dem Deckelgriff (60) eine Öffnung (80) beinhaltet.

2. Kochgeschirr nach Anspruch 1, wobei:
das erste Ende (62) des Deckelgriffs (60) an einem Außenbereich des Deckels (10) befestigt ist und sich weg von dem Außenbereich hin zu der Mitte des Deckels (10) erstreckt; und
sich die Öffnung (80) der Länge nach entlang des Deckelgriffs (60) erstreckt.

3. Kochgeschirr nach Anspruch 1, wobei:
die Öffnung (80) eine erste Seite (82) und eine zweite Seite (84) aufweist, die von der ersten Seite (82) beabstandet ist, und wobei die erste Seite (82) und die zweite Seite (84) mit einem Utensiliengriff in Eingriff gehen, der in der Öffnung (80) platziert wird.

4. Kochgeschirr nach einem vorhergehenden Anspruch, wobei:
der Deckelgriff (60) einen sich nach oben erstreckenden Bereich (66) und einem sich nach innen erstreckenden Bereich (68) aufweist, der sich weg von dem sich nach oben erstreckenden Bereich (66) hin zu der Mitte des Deckels (10) erstreckt und in dem freien Ende (64) endet;
sich das Stützelement (98) für den Utensiliengriff an dem freien Ende (64) befindet; und
sich das Stützelement (94) für das Utensilienarbeitsende an dem sich nach oben erstreckenden Bereich (66) befindet.

5. Kochgeschirr nach Anspruch 4, wobei:
das Sicherungselement für den Utensiliengriff benachbart zu dem Stützelement (94) für das Utensilienarbeitsende ist.

6. Kochgeschirr nach einem vorhergehenden Anspruch, wobei:
ein Behälter (20) mit einer offenen Oberseite vorgesehen ist; und
der Deckel (10) zum Abdecken der offenen Oberseite bemessen ist.

## Revendications

1. Batterie de cuisine, comprenant :
un couvercle (10) pour recouvrir une partie supérieure ouverte d'un récipient (20) ;
une poignée (60) située sur ledit couvercle, ladite poignée de couvercle (60) comprenant une première extrémité (62) fixée au couvercle (10) et une seconde extrémité libre (64) ;
ladite poignée de couvercle (60) ayant une partie de support d'ustensile (90) ;
ladite partie de support d'ustensile (90) ayant un élément de fixation de poignée d'ustensile pour maintenir une poignée d'ustensile d'un ustensile ayant la poignée d'ustensile et une extrémité de travail ;
ladite partie de support d'ustensile (90) ayant un élément de support de poignée d'ustensile (98) sur une face supérieure de ladite poignée de couvercle (60) ; et
ladite partie de support d'ustensile (90) ayant un élément de support d'extrémité de travail d'ustensile (94) sur ladite poignée de couvercle (60) ; **caractérisée par le fait que** :
ledit élément de fixation de poignée d'ustensile dans ladite poignée de couvercle (60) comprend une ouverture (80).

2. Batterie de cuisine selon la revendication 1, dans laquelle :
ladite première extrémité (62) de ladite poignée de couvercle (60) est fixée à une région externe dudit couvercle (10) et s'étend à l'opposé de ladite région externe vers le centre dudit couvercle (10) ; et
ladite ouverture (80) s'étend longitudinalement le long de ladite poignée de couvercle (60).

3. Batterie de cuisine selon la revendication 1, dans laquelle :
ladite ouverture (80) comprend un premier côté (82) et un second côté (84) espacé dudit premier côté (82), et lesdits premier (82) et second (84) côtés mettant en prise une poignée d'ustensile placée dans ladite ouverture (80) .

4. Batterie de cuisine selon l'une quelconque des revendications précédentes, dans laquelle :
ladite poignée de couvercle (60) comprend une région s'étendant vers le haut (66) et une partie s'étendant vers l'intérieur (68) s'étendant à l'opposé de ladite région s'étendant vers le haut (66) vers le centre dudit couvercle (10) et se terminant dans l'extrémité libre (64) ;
ledit élément de support de poignée d'ustensile (98) se trouve sur ladite extrémité libre (64) ; et
ledit élément de support d'extrémité de travail d'ustensile (94) se trouve sur ladite région s'étendant vers le haut (66).

5. Batterie de cuisine selon la revendication 4, dans laquelle :
ledit élément de fixation de poignée d'ustensile est adjacent audit élément de support d'extrémité de travail d'ustensile (94).

6. Batterie de cuisine selon l'une quelconque des revendications précédentes, dans laquelle :
un récipient (20) ayant une partie supérieure ouverte est prévu ; et
ledit couvercle (10) est dimensionné pour recouvrir ladite partie supérieure ouverte.
